# EUROPEAN PATENT SPECIFICATION

(11) **EP 4 187 701 B1**
(45) Date of publication and mention of the grant of the patent: **12.02.2025**
(21) Application number: 21210596.9
(22) Date of filing: 25.11.2021
(51) Int. Cl.: H01M 50/249, B60L 50/64

(54) **LATERAL BATTERY BRACKET COMPRISING TWO SEMI PRODUCTS**
SEITLICHE BATTERIEHALTERUNG MIT ZWEI HALBZEUGEN
SUPPORT DE BATTERIE LATÉRAL COMPRENANT DEUX SEMI-PRODUITS

(43) Date of publication of application: 31.05.2023
(73) Proprietor: Samsung SDI Co., Ltd., Yongin-si, Gyeonggi-do 17084 (KR)
(72) Inventor: Kojc, Miran, 8071 Hausmannstätten (AT); Burke, Thomas, 8564 Ligist (AT)
(74) Representative: Gulde & Partner

(56) References cited:
- DE-B3- 102020 103 240
- JP-A- H11 297 290
- US-A1- 2018 208 038
- US-B1- 10 494 030
- US-B2- 10 946 904

## Description

### Field of the Disclosure

The present disclosure relates to a battery bracket comprising two semi products, viz. an outer structure and an inner structure. The disclosure further relates to a battery pack with a battery bracket according to the present disclosure. Moreover, a vehicle is disclosed that uses a battery pack with a battery bracket according to the present disclosure.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle additionally powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e. g. cylindrical or prismatic, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid or fully electric vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery pack requires appropriate mechanical connections between the individual components, e. g., of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e. g. an electric vehicle. Thus, the replacement of defect system parts, e. g., a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e. g., in the mechanic's workshop, of the bulky battery systems becomes difficult.

US 10 946 904 B2 relates to a vehicle body structure including a pair of side sills and a battery case joined to the side sills via respective brackets, each side sill includes an outer panel, an inner panel defining a closed cross section structure jointly with the outer panel, a first stiffener extending in the fore and aft direction in a space defined between the outer panel and the inner panel and having a lower edge joined to the lower edges of the outer panel and the inner panel, and a second stiffener formed as a channel member extending in the fore and aft direction and having an open side facing in the inboard direction, the second stiffener having an upper edge and a lower edge attached to an outboard side of the first stiffener.

In US 10 494 030 B1, an ensemble of support assemblies for a battery pack is described. The support assemblies each include, among other things, a hoop bracket coupling a battery pack to a vehicle body structure, and a tuned bracket within an open area of the hoop bracket. The tuned bracket is configured to control a collapse of the hoop bracket in response to a load above a threshold level to reduce a transfer of the load to the battery pack.

DE 10 2020 103 240 B3 discloses a fastening device for an electrical energy source which is used for traction, that is to say to drive a vehicle and which can be arranged below a vehicle floor between rocker panels of the vehicle, having a housing for receiving and holding the electrical energy source and a plurality of fastening elements for fastening the housing to a body of the vehicle, the plurality of fastening elements having a housing-side end for fastening to the housing, a sill-side end for fastening to one of the sills and in an installed state in at least one imaginary plane arranged perpendicular to a straight-ahead driving direction of the vehicle between the housing-side The end and the sill-side end have an at least partially curved course with at least one turning point.

Till now, mostly in use are aluminum-casted battery pack cases with battery brackets made of screwed steel or casted by aluminum die pressure. This also restricts the possibilities of mounting the battery pack into a vehicle, as connecting the battery pack case to the vehicle chassis is only possible in several chosen points.

Thus, there is a need of finding new design solutions with respect, i. a., to geometry problems, production problems, and material properties.

It is thus an object of the present invention as defined by the independent claims to overcome or reduce at least some of the drawbacks of the prior art and to provide a battery pack with improved characteristics at least as to geometry, production, and material properties. In particular, it is an object of the present invention to provide a lateral battery member (battery bracket) as part of housing structure that can take a load of one or more foreign impact bodies (e. g., in case of a crush or crash event on vehicle level) coming from aside.

### Summary of Invention

The invention is defined by the appended claims. The description that follows is subjected to this limitation. Any disclosure lying outside the scope of said claims is only intended for illustrative as well as comparative purposes.

One aspect of the present invention relates to a battery bracket for mounting a battery pack case inside a vehicle. The battery bracket comprises: an outer structure having a lower part and an upper part forming a cavity between the lower part and the upper part; an inner structure arranged in the cavity. The outer structure is configured for being fixed to an outer side face of the battery pack case. The inner structure meanders between the lower part and the upper part in that the inner structure comprises one or more lower contact areas and one or more upper contact areas, wherein the inner structure contacts the lower part in the lower contact areas and contacts the upper part in the upper contact areas. A region of the inner structure is configured to being fixed to an outer side face of the battery pack case.

Another aspect of the present invention relates to a battery pack comprising a case, the case having at least one outer side face, on which a battery bracket according to the afore-described aspect is fixed.

Yet another aspect of the present invention refers to a vehicle comprising at least one battery pack according to the afore-mentioned aspect.

Further aspects of the present invention are defined in the dependent claims.

### Brief Description of the Drawings

Features will become apparent to those of ordinary skill in the art by describing in detail exemplary embodiments with reference to the attached drawings in which:
- Fig. 1: illustrates a schematic cross-sectional view of a battery bracket according to an embodiment.
- Fig. 2: illustrates a schematic top view of the battery bracket according to an embodiment.
- Fig. 3: illustrates a schematic three-dimensional view of the battery bracket according to an embodiment.
- Fig. 4A, 4B: illustrate schematically the deformation of the battery bracket according to an embodiment in a state, wherein an external force impacts onto the battery bracket.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

To facilitate the description, a Cartesian coordinate system with axes x, y, z maybe also provided in at least some of the figures. Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

### General Concept

A first aspect of the present invention refers to a battery bracket for mounting a battery pack case inside a vehicle. The battery bracket comprises: an outer structure having a lower part and an upper part forming a cavity between the lower part and the upper part; an inner structure arranged in the cavity. The outer structure is configured for being fixed to an outer side face of the battery pack case. The inner structure meanders between the lower part and the upper part in that the inner structure comprises one or more lower contact areas and one or more upper contact areas, wherein the inner structure contacts the lower part in the lower contact areas and contacts the upper part in the upper contact areas. Further, a region of the inner structure is configured for being fixed to an outer side face of the battery pack case.

The term "battery pack case" relates to a case configured for housing a battery pack.

Instead of the term "area" one could also use the term "region" or the like in the present context. This holds also for the following remarks and explanations. Also, instead of "case," the term "casing" or "housing" could be used. Further, the terms "lower" and "upper" are used to distinguish the two different parts of the outer structure in a simple, intuitive, and easily legible manner. Of course, the terms "lower part" and "upper part" could be replaced, throughout the complete disclosure, for example by the expressions "first part" and "second part". Instead of "battery bracket", the term "battery lateral member" could be alternatively used.

In embodiments, the inner structure may comprise one, two, three, four, five, six, or more lower contact areas. Further, the inner structure may comprise one, two, three, four, five, six, or more upper contact areas.

In embodiments, there may be lower and/or upper contact areas, where the inner structure is not fixated to the respective lower and/or upper part. In those embodiments, the inner structure may glide or slide on the inner surface of the outer structure (i. e., on the surface of the cavity) when the outer structure deforms such that a force is exerted to at least some of the lower and/or upper contact areas of the inner structure. Nonetheless, due to the elasticity of the inner structure, counteracting forces are exerted by the inner structure to the outer structure through the contact areas. These counteracting forces support (i. e., stabilize) the outer structure up to a certain degree, while at the same time still allowing for deformation of the outer structure.

The term "meandering" may denote that the inner structure contacts the lower part and the upper part of the outer structure in an alternating manner. However, in alternative embodiments, the inner structure may contact one of the lower and upper part of the outer structure two or more times before it then contacts the respective other part of the outer structure.

The fixation of the outer structure to a side face of the battery pack may preferably become established by welding (e. g., weld seams). However, in embodiments, the fixation of the outer structure to a side face of the battery pack may also be established (alternatively or additionally) by other fixing methods such as screwing.

According to one embodiment of the battery bracket, the inner structure is fixed to the lower part in at least one of the lower contact areas.

According to one embodiment of the battery bracket, the inner structure is fixed to the upper part in at least one of the upper contact areas.

In embodiments, the inner structure is fixed to the lower part of the outer structure in one, two, three, four, five, six, or more lower contact areas. Further, the inner structure may be fixed to the upper part of the outer structure in one, two, three, four, five, six, or more upper contact areas.

In embodiments, the inner structure is fixed to the lower part of the outer structure in all lower contact areas. Further, the inner structure may be fixed to the upper part of the outer structure in all upper contact areas.

In comparison to embodiments, wherein the inner structure only contacts the inner surface of the cavity (without being fixed to the latter), the stabilization effect (support) of the inner structure onto the outer structure in case of deformations of the outer structure is increased, in particular due to shear forces transmitted through the inner structure between those lower and upper contact areas, in which the inner structure is fixed to the outer structure. A deformation of the outer structure in case of external forces acting on the outer structure may thus be reduced in comparison to embodiments, wherein the inner structure is not fixed to the outer structure.

The fixation(s) of the inner structure to the lower part and/or the upper part of the outer structure may preferably become established by welding (e. g., weld seams). However, in embodiments, the fixation(s) of the inner structure to the lower part and/or the upper part may also be established (alternatively or additionally) by other fixing methods such as screwing.

According to one embodiment of the battery bracket, the cavity formed between the lower part and the upper part comprises an opening. The lower part comprises a lower flange at the opening. The upper part comprises an upper flange at the opening. The lower flange and the upper flange are each configured for being fixed to an outer side face of the battery pack case.

Preferably, the lower flange and the upper flange are each directed away from the opening of the cavity. The flanges are each an example for a fastening means that allows a fixation of the outer structure to a side face of the battery pack. Of course, in other embodiments, other fastening means may be provided alternatively or additionally to allow for a fixation of the outer structure to a side face of the battery pack.

According to one embodiment of the battery bracket, a region of the cavity located opposite to the opening is left void.

The expression "left void" denotes that the respective region of the cavity is not filled by the inner structure. This has the effect that the outer structure is not supported by the inner structure, resulting that this region realizes a first "crush zone," in which external mechanical energy operating on the outer structure may be absorbed by a deformation of the first "crush zone" to a larger extend than in the region of the outer structure being internally supported by the inner structure (second "crush zone").

Then, when the battery bracket is fixed to a side face of a case of a battery pack, a distal end (i. e., a region opposite to the region fixed to the side face or the region closest to the side face) of the inner structure is arranged at a distance to a distal end of the outer structure such that a "crush zone" (above: second "crush zone") of lower rigidity is realized outside the distal end of the inner structure compared to a further "crush zone" (above: first "crush zone") of higher rigidity realized in the region, wherein the inner structure is located inside the outer structure.

According to one embodiment of the battery bracket, the cross-sectional profile of the outer structure tapers, at least in a region of said cross-sectional profile, when viewed along a direction pointing from the opening of the cavity through the cavity or into the cavity. It is clear that the afore-mentioned region of the inner structure is configured for being fixed to an outer side of a case of a battery pack facing the opening of the cavity formed by the outer structure, as otherwise, no mechanical connection between the inner structure and the case could be established. Preferably, when the battery bracket is mounted on the case of a battery pack, each of the lower flange, the upper flange, and the afore-mentioned region of the inner structure configured for being fixed to an outer face of a case of a battery pack are fixed at a time to a face of said case of a battery pack.

The fixation of the inner structure to a side face of the battery pack may preferably become established by welding (e. g., by a weld seam). However, in embodiments, the fixation of the inner structure to a side face of the battery pack may also be established (alternatively or additionally) by other fixing methods such as screwing.

According to one embodiment of the battery bracket, wherein the region of the inner structure configured for being fixed to an outer side face of the battery pack case is located, on a surface of the inner structure, between one of the lower contact areas of the inner structure and one of the upper contact areas of the inner structure.

Then, when viewing at a cross-sectional profile of the battery bracket when fixed to a side face of a case of a battery pack, the inner structure may first contact (or be fixed to), e. g., the upper part of the outer structure, then be fixed to the side face of the battery pack, and subsequently contact (or be fixed to) the lower part of the outer structure.

According to one embodiment of the battery bracket, the cross-sectional profile of the battery bracket is constant at least in a region of the bracket, when viewed in a direction perpendicular to the outer side face.

In other words, there is one direction relative to the battery bracket, measured in which the curvature of the outer structure as well as the curvature of the inner structure is zero for any arbitrary point of a surface of the respective (outer or inner) structure. Still in other words, any curvatures of the outer structure as well as of the inner structure are curvatures have parallel axes of curvature (note that the curvature and the respective axis of curvature generally differentially changes for any point of a surface of a curved structure, hence also for any point of the outer structure and any point of a surface of the outer structure). Usually, the battery bracket is an elongated body configured for extending along the planar side face of a case of a battery pack. Then, when the battery bracket is fixed to the side face of this case, the cross-sectional profile of the battery bracket is the same for all cross-sections taken perpendicular to the side face at least over the main region of the side face. In embodiments, however, the ends of the battery brackets (with regard to a direction perpendicular to the afore-mentioned cross-sections) may exhibit different cross-sections, e. g., to form end caps of the battery brackets or the like.

According to one embodiment of the battery bracket, the outer structure is made of a sheet of metal, preferably a sheet of metal made of one piece of metal.

According to one embodiment of the battery bracket, the inner structure is made of a sheet of metal, preferably a sheet of metal made of one piece of metal.

According to one embodiment of the battery bracket, the outer structure is made of a sheet of steel.

According to one embodiment of the battery bracket, the inner structure is made of a sheet of steel.

According to one embodiment of the battery bracket, the outer structure is made of a cold roll-formed steel.

According to one embodiment of the battery bracket, the inner structure is made of a cold roll-formed steel.

According to one embodiment of the battery bracket, the outer structure and the inner structure are each made of a cold roll-formed steel, and the cold roll-formed steel of the outer structure has a higher steel material grade than the cold roll-formed steel of the inner structure.

A second aspect of the disclosure relates to a battery pack comprising a case. The case has at least one outer side face, on which a battery bracket according to the first aspect is fixed.

Typically, the case of a battery pack essentially exhibits a cuboid shape or is formed like a parallelepiped or like a prism, e. g., like a prism with a trapezoidal base area. Such cases of a battery pack comprise six (essentially planar) side faces. Accordingly, in embodiments of battery packs, battery brackets according to the invention (see above) may be mounted onto one, two, three, four, five, or six of the side faces of a case of a battery pack.

In one embodiment of the battery pack according to the invention, the at least one outer side face comprises an outer layer made of steel.

In one embodiment of the battery pack according to the invention, the case comprises at least one stiffener formed in a planar shape and arranged perpendicular to an outer side face, to which the battery bracket is fixed.

A third aspect of the disclosure refers to a vehicle comprising at least one battery pack according to the second aspect.

Implementing materials with higher strength, better ductile behavior and, consequently, fatigue behavior, can, from a mechanical point of view, allow for a better performance of the battery pack housing in total (e. g., a housing with welded brackets) and at the same time save the space required for the rechargeable energy storage system (RESS) in a vehicle chassis in order to reach higher volumetric (or mass) energy density of a RESS.

For example, the crush folding zone of one or more lateral members (in the following also referred to as "battery brackets") should stay outside of the battery pack housing and the space of the cell stacks. Specifically, a covering of the lateral battery housing length with a lateral member can distribute an impactor force on further stiffener elements of the battery pack housing.

Steel is a common material in the world of technic, as it is easily to handle during production (e. g., forming, cutting, joining, ...). Steel also exhibits a high fire resistance: The melting point is high such that a degradation of physical material properties with raising of temperature is less significant in comparison to other metals being commonly in use such as aluminum. This concerns, for example, the (offset) yield point *R*_{p0,2}(T), the tensile strength *R*ₘ(T), and the expansion coefficient ε(T), each of these quantities being a function of the temperature T. Specifically, the expansion coefficient ε(T) can contribute to a safer battery system in a case of malfunction of the latter (e. g., thermal runaway of battery the cells and, as a consequence thereof, thermal propagation).

Another aspect is the way of fixing battery brackets onto the battery pack housing. For example, welding of battery brackets on the battery pack housing may contribute to cost saving during manufacture, at transport, and even with regard to investment costs (tooling) in comparison with battery brackets being implemented in design solution as separate parts.

To design a lateral battery member (battery bracket) as part of housing structure that can take a load of one or more foreign impact bodies (e. g., in case of a crush or crash event on vehicle level) coming from aside, the lateral battery member must exhibit a suitable ductile behavior (from geometrical and material point of view). Preferably, the lateral battery member must guide (distribute) the force of an external impactor to the stiffener structure inside the housing, while at the same time prohibiting a deformation of battery cells inside the housing. Thus, crush folding zone(s) of the lateral member shall stay outside the battery case. Moreover, the lateral battery member should have a progressive resistance behavior to the impactor.

### Specific Embodiments

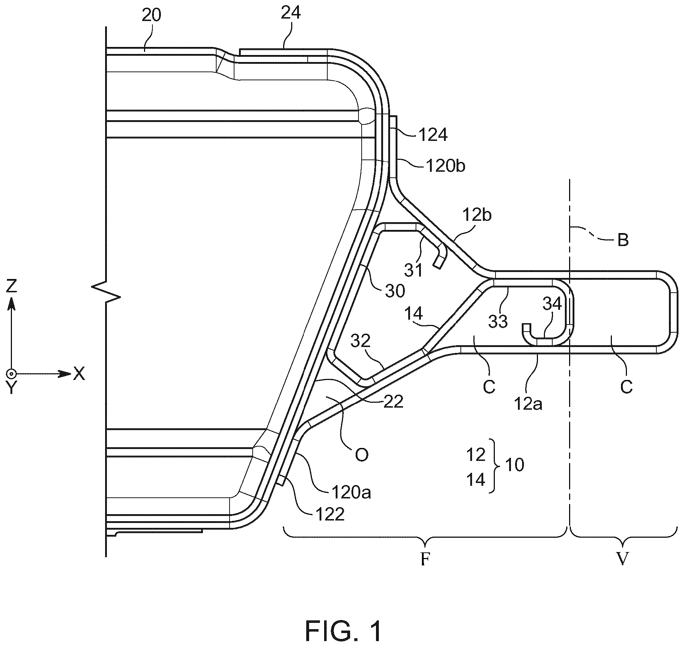

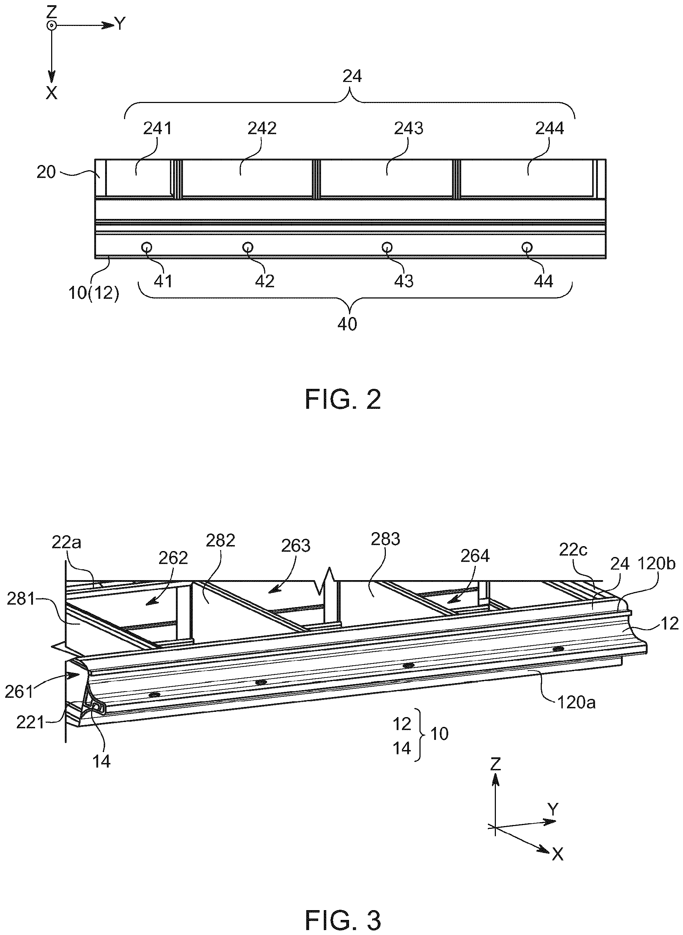

Figure 1 provides a schematic cross-sectional view of an embodiment of a battery bracket 10 according to the invention. Here, the battery bracket 10 is shown in a state being mounted onto an outer side face 22 of a battery pack case 20 for accommodating a battery pack (not shown). Only a part of the battery pack case 20 is shown in Fig. 2. The battery bracket 10 comprises an outer structure 12 and an inner structure 14. The outer structure 12 and the inner structure 14 are two different linear semi-products, each being realized as a cold roll-formed steel profile. Here, the term "linear" refers to the y-axis of the coordinate system orientated perpendicular to the drawing plane of Fig. 1 and thus not shown in the figure. In other words, the outer structure 12 as well as the inner structure 14 extend linearly along the y-direction (see Figs. 2 and 3). In other words, the cross-sectional profile of the battery bracket 10 as shown in Fig. 1 is the same for any intersection through the battery bracket 10 taken along a plane parallel to the x-z-plane (i. e., parallel to the drawing plane of Fig. 1).

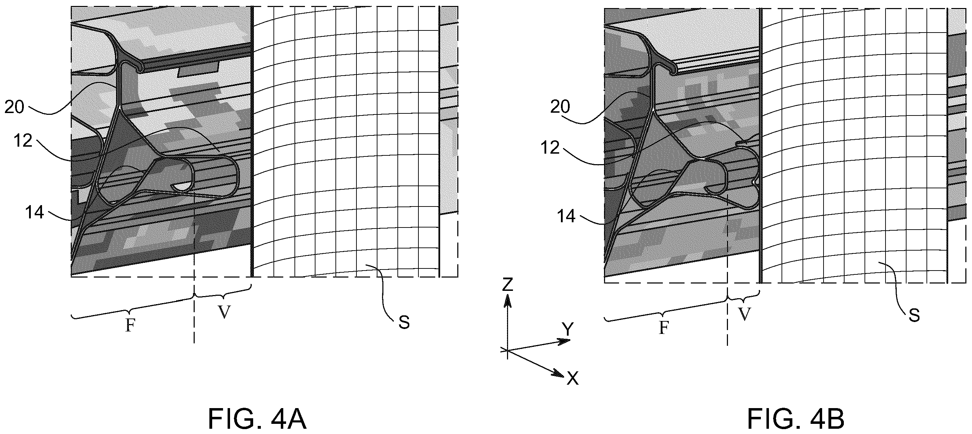

In embodiments, the cold roll-formed steel profile forming the outer structure 12 is made of a material belonging to a group of steel materials with higher steel material grades (e. g., advanced or ultra-high steel grades). Specifically, the steel material grade of the outer structure 12 should be chosen depending on the design space for the battery bracket 10 and the impactor force, which the battery bracket 10 must be able to resist. In contrast to this, the cold roll-formed steel profile forming the inner structure 14 is made of the material belonging to the group of steel materials having a lower steel material grade in comparison to the steel material grade of the outer structure 12. For example, with regard to the (offset) yield point *R*_{p0.2} of the used steel materials, the (offset) yield point of the outer structure 12 is greater than the (offset) yield point of the inner structure 14. In comparison to a steel having a higher material grade, steel with a lower material grade may provide less rigidity but a higher degree of ductility such that larger deformations are possible without breakage. A reason therefore is that the inner structure shall absorb energy over its entire travel (in case of a deformation) as far as possible without breaking. A choice of the materials as described in the foregoing has the advantageous effect that the shape of the inner structure 14 adapts to changes in the shape of the outer structure 12 upon deformation of the latter due to the impact of external forces. This will be described in further detail below in the context of Fig. 4.

The outer structure 12 comprises, with respect to the z-axis of the coordinate system, a lower part 12a and an upper part 12b. A cavity C is formed between the lower part 12a and the upper part 12b of the outer structure 12. On the left end of the outer structure 12 (with respect to the view provided by Fig. 1), the cavity C has an opening O. The cavity C is closed at its end opposite to the opening O.

Two flanges, i. e., a lower flange 120a and an upper flange 120b, are arranged at the opening O. Specifically, the lower flange 120a is formed as part of the lower part 12a of the outer structure 12, and correspondingly, the upper flange 120b is formed as part of the upper part 12b of the outer structure 12. Each of the flanges 120a, 120b protrudes away from the opening O. The flanges 120a, 120b are each configured to be fixed to outer side face 22 of the battery pack case 20. Thus, the flanges 120a, 120b each provide contact regions 122, 124 configured for being brought into areal contact (surface contact) with the outer side face 22 of the battery pack case 20. As shown in the example of Fig. 1, the outer side face 22 may not be necessarily of essentially planar shape. Here, an upper region of the outer side face 22 (i. e., the region, where it contacts with the upper flange 120b) is essentially arranged upright (i. e., forms a plane spanned by the z-axis and the y-axis, the y-axis not shown in Fig. 1, as it is perpendicular to the drawing plane), whereas a lower region of the outer side face 22 is inclined with respect to the y-z-plane by a certain angle. Consequently, the shape of the flanges 120a, 120b preferably reflects the shape of the surface of the respective regions on the outer side face 22, to which the flanges 120a, 120b shall be fixed. Thus, in the shown example, the upper flange 120b is arranged upright and the lower flange 120a is inclined with respect to the y-z-plane by the same angle as the lower region of outer side face 22.

In Fig. 1, the battery bracket 10 is illustrated in a state being mounted on the outer side face 22 of the battery pack case 20, i. e., each of the flanges 120a, 120b is affixed to the outer side face 22. Preferably, the fixation of the flanges 120a, 120b to the outer side face 22 is realized by welding. To facilitate the welding, the outer side face 22 may comprise an outer layer 24 made of steel. However, in alternative embodiments of the battery bracket 10, the fixation of the flanges 120a, 120b to the outer side face 22 could alternatively or additionally be realized by other fastening means such as screws and/or rivets or the like.

Starting from the flanges 120a, 120b, the lower and upper parts 12a, 12b of the outer structure 12 running toward each other in a left region of the outer structure 12, when viewed into the x-direction of the coordinate system. In other words, the outer structure 12 of the embodiment of the battery bracket 10 shown in Fig. 1 tapers in a left region of the outer structure 12. In contrast to this, the lower and upper parts 12a, 12b of the outer structure 12 run in parallel in the right region of the outer structure 12.

In the cavity C formed inside the outer structure 12, the inner structure 14 is accommodated. The inner structure 14 meanders between the upper part 12b and the lower part 12a of the outer structure 12. In the example of Fig. 1, the inner structure 14 contacts the inner surface of the outer structure 12 at four contact areas 31, 32, 33, 34 such that the lower part 12a and the upper part 12b the outer structure 12 are touched in an alternating manner by the inner structure 14. Specifically, a first end of the inner structure 14 forms a first contact area 31, which contacts with the upper part 12b of outer structure 12 within the tapering region (left region) of outer structure 12 (see above). Then, when following the meandering line of the inner structure 14 in the cross-sectional view of Fig. 1, the next contact of the inner structure 14 with the outer structure 12 is established with the lower part 12a of outer structure 12 within the tapering region of the latter by means of the second contact area 32. Further following the inner structure 14 in view of Fig. 1, the inner structure 14 then contacts the upper part 12b again in the region of a third contact area 33. The third contact area 33 is located in that portion of the outer structure 12, wherein the lower and upper parts 12a, 12b run in parallel to each other (see above). Eventually, the inner structure 14 bends down so as to contact in turn the lower part 12a of outer structure 12, again in the region of the latter, wherein the lower and upper parts 12a, 12b run in parallel to each other (i. e., the right region of the outer structure 12 as shown in Fig. 1; see above).

By means of the four contact areas 31, 32, 33, 34, the inner structure 14 provides support, from the inside of outer structure 12, to the lower and upper parts 12a, 12b the outer structure 12 such that the latter is stabilized in the region, wherein the inner structure 14 extends within the cavity C. Preferably, the inner structure 14 is fixed to the outer structure 12 at each of the four contact areas 31, 32, 33, 34. However, in embodiments, the inner structure 14 may not be fixed to the outer structure 12 at least some of the contact areas 31, 32, 33, 34. Even in the latter case, however, the inner structure 14 may provide support to the outer structure 12. Upon deformation of the outer structure 12, contact areas of the inner structure 14 may slide or glide along the inner surface of the structure 12. However, such as sliding or gliding is prohibited in the case of contact areas, where the inner structure 14 is fixed to the outer structure 12. In the latter case, a deformation of the outer structure 12 may have more impact onto the inner structure 14, i. e., there may be more deformation energy be absorbed by the inner structure 14 upon deformation of the outer structure 12 in comparison to embodiments, wherein the inner structure 14 and the outer structure 12 are fixed to each other and each of the contact areas 31,32, 33, 34.

Preferably, any fixations of the inner structure 14 to the outer structure 12 is realized by welding. However, in alternative embodiments of the battery bracket 10, the fixation of the inner structure 14 to the outer structure 12 could alternatively or additionally be realized by other fastening means such as screws and/or rivets or the like.

The inner structure 14 is configured to be fixed to the outer side face 22 of the battery pack case 20.

In the example shown in Fig. 1, the inner structure 14 it is fixed to the outer side face 22 in a region 30 being arranged, on a surface of the inner structure 14, between the first contact area 31 and the second contact area 32 as described above. To that end, the shape of the inner structure 14 preferably reflects, in the region to be brought into contact with the outer side face 22 of the battery pack case 20, the geometry of the respective region of the outer side face 22. Then, the inner structure 14 is configured for being brought into areal contact with the outer side face 22.

Preferably, the fixation of the inner structure 14 to the outer side face 22 of is realized by welding. To facilitate the welding, the outer side face 22 may comprise an outer layer 24 made of steel. However, in alternative embodiments of the battery bracket 10, the fixation of the of the inner structure 14 to the outer side face 22 could alternatively or additionally be realized by other fastening means such as screws and/or rivets or the like.

The inner structure 14 accommodated in the cavity C formed by the outer structure 12 may not completely fill the cavity C. Instead, as shown in Fig. 1, a certain portion of the cavity C maybe left void, i. e., the inner structure 14 may not extend into the portion of the cavity C left void. Here, the inner structure 14 completely fills this portion of the cavity C, which is formed within the tapering region of the outer structure 12 (see above). From the tapering region of the outer structure 12, the inner structure 14 extends into the right portion of the outer structure 12 (as to the view depicted in Fig. 1), where the lower and the upper parts 12a, 12b run parallel to each other. However, the latter region (i. e., the right portion of outer structure 12) it is not completely filled by the inner structure 14. Accordingly, an end portion of the outer structure 12 located opposite to the opening O of the cavity C is left void. This is schematically indicated in Fig. 1 by the vertical dashed line B separating, with respect to the x-axis of the coordinate system, a first portion of the outer structure 12 being filled by the inner structure 14 (i. e., the region between the outer side face 22 of the battery pack case 20 and the dashed line B; in the following referred to as "filled portion" F of the battery bracket 10) from a second portion of the outer structure 12 not being filled by the structure 14 (i. e., the region between the dashed line B and the right end of the outer structure 12; in the following referred to as "void portion" V of the battery bracket 10).

In above-described exemplary assembly of an embodiment of the battery bracket 10 according to the invention, the outer structure 12 is supported by the inner structure 14 only in the filled portion F. In the void portion V, however, the outer structure 12 does not enjoy any support from inside. Consequently, the overall rigidity of the filled portion F is higher than the overall rigidity of the void portion V. The effect of this construction in case of external forces acting on the battery bracket 10 will be described in further detail below with the help of Fig. 4.

Figure 2 illustrates a schematic top view of an embodiment of the battery bracket according to the invention. As in Fig. 1, the battery bracket 10 is shown in a state being mounted to the battery pack case 20 for a battery pack (not shown). Only a part of the battery pack case 20 is shown in Fig. 2. The battery bracket 10 extends linearly along the y-direction of the coordinate system. In the top view, only the outer structure 12 of the battery bracket 10 is visible. A plurality of through-holes 40 is provided in the end of the battery bracket 10 depicted as its bottom end in the view of Fig. 2. The bottom end of the battery bracket 10 as illustrated in Fig. 2 corresponds to the right end of the battery bracket 10 as shown in Fig. 1. The plurality of through-holes 40 provides a means for mounting the battery bracket 10 into a vehicle (not shown). The plurality of through-holes 40 is arranged as a series of through-holes 41, 42, 43, and 44 stringed along a direction parallel to the y-axis. Each of the through-holes 41, 42, 43, 44 is arranged in the void portion V of the battery bracket 10 (see Fig. 1) such that the shape of the inner structure 14 is not affected by pins, screws, or other means used for mounting the battery bracket 10 into a vehicle.

At its upper end (with respect to the view of Fig. 2), the battery bracket 10 is fixed to the outer layer 24 covering the outer side face 22 of the battery pack case 20 (see Fig. 1). As shown in Fig. 1, the outer layer 24 is reverted around the lower and upper edges of the outer side face 22 so as to cover at least a part of the lower and upper side faces of the battery pack case 20.

Figure 3 illustrates a schematic three-dimensional view of an embodiment of the battery bracket 10 according to the invention in a state mounted to the outer side face 22 of a battery pack case 20. Opposite to the outer side face 22, to which the battery bracket 10 is affixed, the battery pack case 20 is confined by a rear side 22a. To the right, the battery pack case 20 is confined by a right side face 22c. The left side of battery pack case 20 is not shown in Fig. 3. Instead, the structure of the battery pack case 20 as described in the following could be continued to the left side. As shown in Fig. 3, the battery pack case 20 may be subdivided into a plurality of compartments 261, 262, 263, 264 separated from each other by separators 281, 282, 283. The separators 281, 282, 283 may also act as an inner stiffness structure for the battery pack case 20. Each of the compartments 261, 262, 263, 264 is configured for accommodating a stack of battery cells (not shown). In the illustrated example of the battery pack case 20, the compartments 261, 262, 263, 264 are aligned or stacked one after the other along the y-direction. The outer side face 22 of the battery pack case 20 is then formed by the entirety of the respective outer side faces of the compartments 261, 262, 263, 264 facing into the x-direction (only a side face 221 of the leftmost compartment 261 is visible in Fig. 3). In examples for battery pack cases 20 suitable for being used with embodiments of the battery bracket 10 according to the invention, the outer layer 24 may thus be correspondingly subdivided into a plurality of layer-stripes 241, 242, 243, 244 as shown in Fig. 2. The layer-stripes may also act as a thermal interface to the battery module or the corresponding battery cell. Each of the layer-stripes 241, 242, 243, 244 covers a corresponding area of the outer side face 22 in the region of the respective compartment 261, 262, 263, 264. Adjacent layer-stripes 241, 242, 243, 244 may the separated from each other in the regions of the separators 281, 282, 283.

However, the separators 281, 282, 283 not only separate the individual compartments 261, 262, 263, 264 from each other but also act an inner stiffener structure within the battery pack case 20, i. e., the separators 281, 282, 283 are able to absorb mechanical energy exerted onto the outer side face 22 (or the rear side 22a). This stabilizes the battery pack case 20 and in particular plays a role in the distribution of external forces acting on the battery pack case 20 via the transmission through the battery bracket 10. This will be explained in further detail below with reference to Fig. 4.

The outer side face 22 of the battery pack case 20 (only the side face 221 of the leftmost compartment 261 is visible in Fig. 3, which forms a part of the outer side face 22 as described above) is covered by the outer layer 24 made of steel. By means of the lower flange 120a and upper flange 120b, the outer structure 12 is affixed (preferably by welding) to the outer layer 24 covering the outer side face 22 as described already above in the context of Fig. 1. Likewise, the inner structure 14 is affixed (preferably by welding) to the outer layer 24 is also described with reference to Fig. 1.

In Figure 4, the deformation of an embodiment of the battery bracket 10 according to the invention, when an external mechanical force is applied to the battery bracket 10, is schematically illustrated by a three-dimensional simulation (FEA calculations) of the battery bracket 10 and (a portion of) the battery pack case 20, to which the battery bracket 10 is attached in a manner as described before with reference to Figs. 1 - 3. Specifically, the inner and outer structures 12, 14 of the battery bracket 10 as well as the outer side face 22 of the battery pack case 20 extend linearly along the y-direction. The internal strains evolving within the cold roll-formed steel sheets of the outer and inner structures 12, 14 of the battery bracket 10 as well as within the outer side face 22 of the battery pack case 20 upon the impact of an external force are indicated by shades of a gray scale. Thereby, a darker shade of gray denotes a higher strain compared to a lighter shade of gray. As only the relative differences / changes in the strains are relevant in the present context, no units are provided in Fig. 4 with regard to the gray scale. The filled portion F and the void portion V of the battery bracket 10 are indicated by curly brackets, which refer to the intersectional cut being visible at the front of the three-dimensional illustrations, these intersectional cuts taken through a plane parallel to the x-z-plane of the coordinate system.

In the illustrated simulation, the source of the external mechanical force (i. e., the foreign impactor) is indicated by a geometrically simple external structure S shaped essentially like a part of a curved surface area of cylinder with a symmetry axis extending parallel to the z-direction. The external structure S pushes, by its curved surface area, into the void portion V of the outer structure 12 of battery bracket 10 in a direction against the x-direction of the coordinate system. Due to these pushes, the battery bracket 10 becomes deformed. In Figs. 4A and 4B, the deformation may be depicted in an exaggerated manner in comparison to typical situations in reality for the sake of illustration.

As already pointed out above with reference to Fig. 1, the overall rigidity of the filled portion F is higher than the overall rigidity of the void portion V. This results in two different "crush zones" or "crush folding zones" or "quenching zones" provided by the battery bracket 10, as will now be explained. The mechanical function of the shown assembly can be described as follows: The outer structure 12 must resist the force of the foreign impactor (here: the external structure S) and at the same time guide (distribute) the force of the foreign impactor onto the stiffness structure of the battery pack case 20. This is realized by a first crush zone corresponding to the void portion V and second crush zone corresponding to the filled portion F.

Crush zones generally are zones that may deform upon an impact exerted by an external force. To deform the crush zones, at least a part of the energy provided by the external force is absorbed and distributed within the structures forming the crush zones. The energy transmitted to the battery pack case 20 is then reduced by the amount of energy absorbed by the crush zones or, in other words, the impact of the external force onto the battery pack case 20 is alleviated by the crush zones.

Due to the lower rigidity of the battery bracket 10 in the first crush zone, the battery bracket 10 becomes easier deformed upon impact of an external force in comparison to the second crush zone. Thus, a main part of an external force is alleviated by the first crush zone. A remainder of the force, however, is transmitted to the second crush zone with higher rigidity. The second crush zone can also be deformed, but its main purpose is to distribute the (remainder of the) external force on the outer side face 22 and thus decrease, on the outer side face 22 of the battery pack case 20, the punctual impact (local impact onto a relatively small region of the outer side face 22) of the external force. Then, due to the distribution of the external force by means of the battery bracket 10, the mechanical energy provided by the external force can be further absorbed by internal state of the structures of the battery pack case 20, as, for example, provided by the separators 281, 282, 283 (each of them arranged in parallel to the x-z-plane of the coordinate system) as described above with reference to Fig. 3.

Specifically, the inner structure 14 provides support to the outer structure 12. To that end, the inner structure 14 must be configured to stabilize the walls of the outer structure 12 (i. e., the internal walls of the cavity C in the region of the filled portion F) and, moreover, should take a role to guide (distribute), via the region of the filled portion (i. e., via the second crush zone), the impactor force to other stiffness structure of battery pack case 20, thereby reducing the surface pressure on the outer side face 22 of the battery pack case 20. Accordingly, the geometry of the internal structure must be designed as crush folding suitable geometry, i. e., it must be designed such that the intended crush folding direction (against the x-axis) is perpendicular to the roll forming direction (parallel to the y-axis). From same point of view, also the material grade of the inner structure 14 must be defined adequately (see above).

As can be taken from the foregoing, the first and second crush zones provide a progressive resistance behavior of the battery bracket 10 against an external force such as the force exerted by the external structure S.

Fig. 4A and Fig. 4B are distinguished in that the force applied to the battery bracket 10 by the external structure S is less in the situation depicted in Fig. 4A in comparison to the situation depicted in Fig. 4B. Again, the absolute values of the applied forces are not relevant in the present context. In the situation illustrated in Fig. 4A, only the void portion V of the battery bracket 10 is affected by the force exerted by the external structure S. In other words, solely the void portion V of the battery bracket 10 (i. e., the first crush zone) undergoes a deformation, whereas the filled portion F (i. e, the second crush zone) remains undeformed. Accordingly, the internal strain present in the outer structure 12 in the region of the void portion V is large in comparison to the internal strain present in the outer structure 12 in the region of the filled portion F and in the inner structure 14, as can be taken by the different shades of gray. In other words, the impact applied by the external structure S towards the battery pack case 20 is almost completely absorbed by the first crush zone.

In the situation illustrated by Fig. 4B, the impact applied towards the battery pack case 20 by the external structure S is increased in comparison to the situation of Fig. 4A. Accordingly, the strain present within the outer structure 12 in the region of the first crush zone has caused plainly visible deformation of the outer structure 12. Specifically, the lower part 12a and the upper part 12b of the outer structure 12 moved apart from each other, when viewing along the z-direction. Within the region of the second crush zone, however, the lower part 12a and the upper part 12b of the outer structure 12 are held together, up to certain degree, by the inner structure 14 meandering between the upper part 12b of the outer structure 12 and affixed to either of the latter (see the description as to Fig. 1). Furthermore, the external structure S has been penetrated into the battery bracket 10 so far that also the inner structure 14 becomes quenched by the external structure S. Accordingly, the inner structure 14 is also affected by the impact caused by the external structure S, resulting in a deformation of the alert structure 14. In other words, the impact towards the outer side face 22 of the battery pack case 20 becomes alleviated by both, the first crush zone and the second.

### Reference signs

- 10: battery bracket
- 12: outer structure
- 12a: lower part of outer structure
- 12b: upper part of outer structure
- 14: inner structure
- 20: case for a battery pack (battery pack case)
- 22: outer side face
- 22a: rear side
- 22c: right side face
- 24: outer layer
- 30: contact region
- 31, 32, 33, 34: contact areas
- 40: plurality of through-holes
- 41, 42, 43, 44: through-holes

- 120a: lower flange
- 120b: upper flange
- 221: outer side face of first compartment
- 261, 262, 263, 264: compartments
- 281, 282, 283: separators (stiffness structure of battery pack case)
- 241, 242, 243, 244: layer-stripes (thermal interface to cell / battery module)

- B: dashed line
- C: cavity
- F: filled portion
- O: opening
- S: external structure providing a force
- V: void portion
- x, y, z: axes of a Cartesian coordinate system

## Claims

1. A battery bracket (10) for mounting a battery pack case (20) at a vehicle, the battery bracket comprising:
an outer structure (12) having a lower part (12a) and an upper part (12b) forming a cavity (C) between the lower part (12a) and the upper part (12b);
an inner structure (14) arranged in the cavity (C);
wherein the outer structure (12) is configured for being fixed to an outer side face (22) of the battery pack case (20);
wherein the inner structure (14) meanders between the lower part (12a) and the upper part (12b) in that the inner structure (14) comprises one or more lower contact areas (32, 34) and one or more upper contact areas (31, 33),
wherein the inner structure (14) contacts the lower part (12a) in the one or more lower contact areas (32, 34) and contacts the upper part (12b) in the one or more upper contact areas (31, 33),
**characterized in that** a region (30) of the inner structure (14) is configured for being fixed to an outer side face (22) of the battery pack case (20).

2. The battery bracket (10) according to claim 1,
wherein the inner structure (14) is fixed to the lower part (12a) in at least one of the lower contact areas (32, 34); and/or
wherein the inner structure (14) is fixed to the upper part (12b) in at least one of the upper contact areas (31, 33).

3. The battery bracket (10) according to claim 1 or 2,
wherein the cavity (C) formed between the lower part (12a) and the upper part (12b) comprises an opening (O);
wherein the lower part (12a) comprises a lower flange (120a) at the opening (O);
wherein the upper part (12b) comprises an upper flange (120b) at the opening (O); and
wherein the lower flange (120a) and the upper flange (120b) are each configured for being fixed to an outer side face (22) of the battery pack case (20).

4. The battery bracket (10) according to claim 3, wherein a region (V) of the cavity (C) located opposite to the opening (O) is left void.

5. The battery bracket (10) according to claims 3 or 4, wherein the cross-sectional profile of the outer structure (12) tapers, at least in a region of the cross-sectional profile, when viewed along a direction (x) pointing from the opening (O) of the cavity (C) through the cavity (C) or into the cavity (C).

6. The battery bracket (10) according to any one of claims 1 to 5, wherein the region (30) of the inner structure (14) configured for being fixed to the outer side face (22) of the battery pack case (20) is located, on a surface of the inner structure (14), between one of the lower contact areas (32) of the inner structure (14) and one of the upper contact areas (31) of the inner structure (14).

7. The battery bracket (10) according to any one of claims 1 to 6, wherein the cross-sectional profile of the battery bracket (10) is constant at least in a region of the bracket, when viewed in a direction (y) perpendicular to the outer side face (22).

8. The battery bracket (10) according to any one of claims 1 to 7,
wherein the outer structure (12) is made of a sheet of metal, preferably a sheet of metal made of one piece of metal; and/or
wherein the inner structure (14) is made of a sheet of metal, preferably a sheet of metal made of one piece of metal.

9. The battery bracket (10) according to claim 8,
wherein the outer structure (12) is made of a sheet of steel; and/or
wherein the inner structure (14) is made of a sheet of steel.

10. The battery bracket (10) according to any one of claims 1 to 8,
wherein the outer structure (12) is made of a cold roll-formed steel; and/or
wherein the inner structure (14) is made of a cold roll-formed steel.

11. The battery bracket (10) according to any one of claims 1 to 8,
wherein the outer structure (12) and the inner structure (14) are each made of a cold roll-formed steel; and
wherein the cold roll-formed steel of the outer structure (12) has a higher steel material grade than the cold roll-formed steel of the inner structure (14).

12. A battery pack comprising a case (20), the case (20) having at least one outer side face (22), on which a battery bracket (10) according to any one of claims 1 to 11 is fixed.

13. The battery pack according to claim 12,
wherein the at least one outer side face (22) comprises an outer layer (24) made of steel and/or
wherein the case (20) comprises at least one stiffener formed in a planar shape and arranged perpendicular to an outer side face (22), to which the battery bracket (10) is fixed.

14. A vehicle comprising at least one battery pack according to claim 12 or 13.

## Patentansprüche

1. Batteriehalterung (10) zur Montage eines Batteriepackgehäuses (20) an einem Fahrzeug, wobei die Batteriehalterung Folgendes umfasst:
eine äußere Struktur (12) mit einem unteren Teil (12a) und einem oberen Teil (12b), die einen Hohlraum (C) zwischen dem unteren Teil (12a) und dem oberen Teil (12b) ausbilden;
eine innere Struktur (14), die in dem Hohlraum (C) angeordnet ist;
wobei die äußere Struktur (12) dazu ausgestaltet ist, an einer äußeren Seitenfläche (22) des Batteriepackgehäuses (20) befestigt zu werden,
wobei die innere Struktur (14) zwischen dem unteren Teil (12a) und dem oberen Teil (12b) so mäandert, dass die innere Struktur (14) einen oder mehrere untere Kontaktbereiche (32, 34) und einen oder mehrere obere Kontaktbereiche (31, 33) aufweist,
wobei die innere Struktur (14) in dem einen oder den mehreren unteren Kontaktbereichen (32, 34) mit dem unteren Teil (12a) in Kontakt steht und in dem einen oder den mehreren oberen Kontaktbereichen (31, 33) mit dem oberen Teil (12b) in Kontakt steht,
**dadurch gekennzeichnet, dass** eine Region (30) der inneren Struktur (14) dazu ausgestaltet ist, an einer äußeren Seitenfläche (22) des Batteriepackgehäuses (20) befestigt zu werden.

2. Batteriehalterung (10) nach Anspruch 1,
wobei die innere Struktur (14) in mindestens einem der unteren Kontaktbereiche (32, 34) an dem unteren Teil (12a) befestigt ist; und/oder
wobei die innere Struktur (14) in mindestens einem der oberen Kontaktbereiche (31, 33) an dem oberen Teil (12b) befestigt ist.

3. Batteriehalterung (10) nach Anspruch 1 oder 2,
wobei der Hohlraum (C), der zwischen dem unteren Teil (12a) und dem oberen Teil (12b) ausgebildet ist, eine Öffnung (O) aufweist,
wobei der untere Teil (12a) einen unteren Flansch (120a) an der Öffnung (O) umfasst;
wobei der obere Teil (12b) einen oberen Flansch (120b) an der Öffnung (O) umfasst;
und
wobei der untere Flansch (120a) und der obere Flansch (120b) jeweils dazu ausgestaltet sind, an einer äußeren Seitenfläche (22) des Batteriepackgehäuses (20) befestigt zu werden.

4. Batteriehalterung (10) nach Anspruch 3, wobei eine Region (V) des Hohlraums (C), die der Öffnung (O) gegenüberliegt, leer gelassen ist.

5. Batteriehalterung (10) nach den Ansprüchen 3 oder 4, wobei sich das Querschnittsprofil der äußeren Struktur (12) mindestens in einer Region des Querschnittsprofils verjüngt, wenn es entlang einer Richtung (x) betrachtet wird, die von der Öffnung (O) des Hohlraums (C) durch den Hohlraum (C) hindurch oder in den Hohlraum (C) hinein weist.

6. Batteriehalterung (10) nach einem der Ansprüche 1 bis 5, wobei die Region (30) der inneren Struktur (14), die dazu ausgestaltet ist, an der äußeren Seitenfläche (22) des Batteriepackgehäuses (20) befestigt zu werden, sich auf einer Oberfläche der inneren Struktur (14) zwischen einem der unteren Kontaktbereiche (32) der inneren Struktur (14) und einem der oberen Kontaktbereiche (31) der inneren Struktur (14) befindet.

7. Batteriehalterung (10) nach einem der Ansprüche 1 bis 6, wobei das Querschnittsprofil der Batteriehalterung (10) mindestens in einer Region der Halterung konstant ist, wenn es in einer Richtung (y) senkrecht zu der äußeren Seitenfläche (22) betrachtet wird.

8. Batteriehalterung (10) nach einem der Ansprüche 1 bis 7,
wobei die äußere Struktur (12) aus einem Metallblech, vorzugsweise einem aus einem Stück gefertigten Metallblech, hergestellt ist; und/oder
wobei die innere Struktur (14) aus einem Metallblech, vorzugsweise einem aus einem Stück gefertigten Metallblech, hergestellt ist.

9. Batteriehalterung (10) nach Anspruch 8,
wobei die äußere Struktur (12) aus einem Stahlblech hergestellt ist; und/oder
wobei die innere Struktur (14) aus einem Stahlblech hergestellt ist.

10. Batteriehalterung (10) nach einem der Ansprüche 1 bis 8,
wobei die äußere Struktur (12) aus einem kaltgewalzten Stahl hergestellt ist; und/oder
wobei die innere Struktur (14) aus einem kaltgewalzten Stahl hergestellt ist.

11. Batteriehalterung (10) nach einem der Ansprüche 1 bis 8,
wobei die äußere Struktur (12) und die innere Struktur (14) jeweils aus einem kaltgewalzten Stahl hergestellt sind, und
wobei der kaltgewalzte Stahl der äußeren Struktur (12) eine höhere Stahlmaterialgüte aufweist als der kaltgewalzte Stahl der inneren Struktur (14).

12. Batteriepack, das ein Gehäuse (20) umfasst, wobei das Gehäuse (20) mindestens eine äußere Seitenfläche (22) aufweist, an der eine Batteriehalterung (10) nach einem der Ansprüche 1 bis 11 befestigt ist.

13. Batteriepack nach Anspruch 12,
wobei die mindestens eine äußere Seitenfläche (22) eine äußere Schicht (24) aus Stahl umfasst und/oder
wobei das Gehäuse (20) mindestens eine flächig ausgebildete und senkrecht zu einer äußeren Seitenfläche (22) angeordnete Versteifung aufweist, an der die Batteriehalterung (10) befestigt ist.

14. Fahrzeug, das mindestens ein Batteriepack nach Anspruch 12 oder 13 umfasst.

## Revendications

1. Support de batterie (10) pour le montage d'un boîtier de bloc-batterie (20) sur un véhicule, le support de batterie comprenant :
une structure externe (12) ayant une partie inférieure (12a) et une partie supérieure (12b) formant une cavité (C) entre la partie inférieure (12a) et la partie supérieure (12b) ;
une structure interne (14) agencée dans la cavité (C) ;
dans lequel la structure externe (12) est configurée pour être fixée sur une face latérale externe (22) du boîtier de bloc-batterie (20) ;
dans lequel la structure interne (14) serpente entre la partie inférieure (12a) et la partie supérieure (12b) en ce que la structure interne (14) comprend une ou plusieurs zones de contact inférieures (32, 34) et une ou plusieurs zones de contact supérieures (31, 33),
dans lequel la structure interne (14) est en contact avec la partie inférieure (12a) dans les une ou plusieurs zones de contact inférieures (32, 34) et est en contact avec la partie supérieure (12b) dans les une ou plusieurs zones de contact supérieures (31, 33),
**caractérisé en ce qu'**une région (30) de la structure interne (14) est configurée pour être fixée sur une face latérale externe (22) du boîtier de bloc-batterie (20).

2. Support de batterie (10) selon la revendication 1, dans lequel la structure interne (14) est fixée à la partie inférieure (12a) dans au moins l'une des zones de contact inférieures (32, 34) ; et/ou
dans lequel la structure interne (14) est fixée à la partie supérieure (12b) dans au moins l'une des zones de contact supérieures (31, 33).

3. Support de batterie (10) selon la revendication 1 ou 2,
dans lequel la cavité (C) formée entre la partie inférieure (12a) et la partie supérieure (12b) comprend une ouverture (O) ;
dans lequel la partie inférieure (12a) comprend une bride inférieure (120a) au niveau de l'ouverture (O) ;
dans lequel la partie supérieure (12b) comprend une bride supérieure (120b) au niveau de l'ouverture (O) ; et
dans lequel la bride inférieure (120a) et la bride supérieure (120b) sont chacune configurées pour être fixées sur une face latérale externe (22) du boîtier de bloc-batterie (20).

4. Support de batterie (10) selon la revendication 3, dans lequel une région (V) de la cavité (C) située à l'opposé de l'ouverture (O) est laissée vide.

5. Support de batterie (10) selon la revendication 3 ou 4, dans lequel le profil en section transversale de la structure externe (12) se rétrécit, au moins dans une région du profil en section transversale, lorsqu'on l'observe selon une direction (x) pointant à partir de l'ouverture (O) de la cavité (C) à travers la cavité (C) ou dans la cavité (C).

6. Support de batterie (10) selon l'une quelconque des revendications 1 à 5, dans lequel la région (30) de la structure interne (14) configurée pour être fixée sur la face latérale externe (22) du boîtier de bloc-batterie (20) est située, sur une surface de la structure interne (14), entre l'une des zones de contact inférieures (32) de la structure interne (14) et l'une des zones de contact supérieures (31) de la structure interne (14).

7. Support de batterie (10) selon l'une quelconque des revendications 1 à 6, dans lequel le profil en section transversale du support de batterie (10) est constant au moins dans une région du support, lorsqu'on l'observe dans une direction (y) perpendiculaire à la face latérale externe (22).

8. Support de batterie (10) selon l'une quelconque des revendications 1 à 7,
dans lequel la structure externe (12) est constituée d'une tôle de métal, de préférence d'une tôle de métal constituée d'une seule pièce de métal ; et/ou
dans lequel la structure interne (14) est constituée d'une tôle de métal, de préférence d'une tôle de métal constituée d'une seule pièce de métal.

9. Support de batterie (10) selon la revendication 8,
dans lequel la structure externe (12) est constituée d'une tôle d'acier ; et/ou
dans lequel la structure interne (14) est constituée d'une tôle d'acier.

10. Support de batterie (10) selon l'une quelconque des revendications 1 à 8,
dans lequel la structure externe (12) est constituée d'un acier formé par laminage à froid ; et/ou
dans lequel la structure interne (14) est constituée d'un acier formé par laminage à froid.

11. Support de batterie (10) selon l'une quelconque des revendications 1 à 8,
dans lequel la structure externe (12) et la structure interne (14) sont chacune constituées d'un acier formé par laminage à froid ; et
dans lequel l'acier formé par laminage à froid de la structure externe (12) possède une plus haute qualité de matériau d'acier que l'acier formé par laminage à froid de la structure interne (14).

12. Bloc-batterie comprenant un boîtier (20), le boîtier (20) ayant au moins une face latérale externe (22), sur laquelle un support de batterie (10) selon l'une quelconque des revendications 1 à 11 est fixé.

13. Bloc-batterie selon la revendication 12,
dans lequel l'au moins une face latérale externe (22) comprend une couche externe (24) constituée d'acier et/ou
dans lequel le boîtier (20) comprend au moins un renfort formé selon une géométrie plane et agencé perpendiculairement à une face latérale externe (22), sur laquelle le support de batterie (10) est fixé.

14. Véhicule comprenant au moins un bloc-batterie selon la revendication 12 ou 13.
